# EUROPEAN PATENT APPLICATION

(11) **EP 3 750 707 A1**
(43) Date of publication of application: **16.12.2020**
(21) Application number: 19748124.5
(22) Date of filing: 29.01.2019
(51) Int. Cl.: B32B 27/20, B29C 65/16, B32B 1/08, F16L 11/24

(54) **LAMINATED SHEET AND LAMINATE, AND METHOD FOR PRODUCING SAME**

(30) Priority: 31.01.2018 JP 2018015678
(71) Applicant: Mitsui Chemicals, Inc., Minato-ku Tokyo 105-7122 (JP)
(72) Inventor: ISAKI, Takeharu, Sodegaura-shi, Chiba 299-0265 (JP)
(74) Representative: Hoffmann Eitle
(86) International application number: PCT/JP2019/002892
(87) International publication number: WO 2019/151212

(57) **Abstract**

Disclosed are a laminated sheet comprising a first dye-containing layer, an intermediate layer and a second dye-containing layer laminated in this order, which is excellent in low temperature impact resistance and suitable for a laser tape winding method with high productivity, characterized in that the intermediate layer is composed of a stretched thermoplastic resin or a stretched thermoplastic resin composition, and each dye-containing layer is composed of a thermoplastic resin composition containing a dye which absorbs light having a wavelength of 300 nm or more and 3000 nm or less; and a laminate, and a method for producing them.

## Description

### Technical Field

The present invention relates to a laminated sheet which is excellent in low temperature impact resistance and suitable for a laser tape winding method with high productivity, a laminate, and a method for producing them.

### Background Art

It has been considered to transport natural liquefied gas (LNG) on the seabed through a pipe installed on the seabed instead of on the sea to reduce costs. The metal pipe installed on the seabed needs to have high strength even at an extremely low temperature. Further, the material used for pipes and containers for transporting or storing a low temperature fluid such as liquid nitrogen and liquefied carbon dioxide is also desired to be a material having a high strength at an extremely low temperature.

For example, Patent Document 1 describes a pressure vessel having a reinforced resin layer obtained by winding a tape or sheet of a thermosetting resin composition on the surface of a vessel which is a substrate by a filament winding molding method (tape winding molding method). The reinforced resin layer on this pressure vessel is formed by applying a tape or sheet of a thermosetting resin composition onto the surface of the substrate and then heating and thermosetting using a device such as an oven.

As a tape winding molding method, there is a molding method using a laser fusion method (laser tape winding method), as a method having particularly high degree of freedom in shape.

For example, Patent Document 2 describes a multilayer sheet for laser marking made of a thermoplastic resin, which is a laminate composed of three layers made of a thermoplastic resin, and in which two surface layers contain carbon black.

Patent Document 3 describes a long member (for example, thread, tape, fiber, filament) in which a large number of layers made of a specific polyolefin resin are laminated. It is described that this long member is useful as a material for a pipe or a container and a pipe produced by using this long member is excellent in low temperature impact resistance.

Patent Document 4 describes a film in which a skin layer containing a high crystallinity polymer is laminated on both surfaces of a core layer (inner layer) containing a low crystallinity polymer, and which is elongated at a specific ratio. It is described that this film has low permanent set and can be used as a material for diaper back sheets, and similar absorbent garments.

Patent Document 5 describes a composite film in which a film (II layer) having a thickness of 0.5 to 3.5 µm obtained by blending 5 to 20% by weight of carbon black in an propylene-α-olefin random copolymer is laminated on at least one surface of a biaxially oriented crystalline polypropylene film (I layer). It is described that this composite film can be used for electrical applications requiring a high degree of conductivity, for example, capacitors, films for coating cable wires, and films for packaging electronic components.

### Related Art Documents

### Patent Documents

Patent Document 1: JP H09-257193
Patent Document 2: JP 2007-210166
Patent Document 3: JP 2008-517804
Patent Document 4: JP 2009-513395
Patent Document 5: JP H04-125146

### Summary of Invention

### Technical Problem

However, in the pressure vessel described in Patent Document 1, impact resistance may be insufficient since the matrix resin of the reinforced resin layer is a thermosetting resin.

The sheet described in Patent Document 2 is a sheet for laser marking, and its use is completely different from the sheet used for the reinforced resin layer of, for example, a pipe. In addition, since the application is different, no study has been made on characteristics such as low temperature impact resistance.

Since the long member described in Patent Document 3 is fused at high temperature without performing laser fusion, it is considered that characteristics such as low temperature impact resistance may deteriorate in some cases.

The laminated film described in Patent Document 4 is a laminated film for absorbent garments, and its application is completely different from the sheet used for the reinforced resin layer of, for example, a pipe. In addition, since the application is different, no study has been made on characteristics such as low temperature impact resistance.

The composite film described in Patent Document 5 is a composite film for electrical applications requiring a high degree of conductivity, and its application is completely different from the sheet used for the reinforced resin layer of, for example, a pipe. In addition, since the application is different, no study has been made on characteristics such as low temperature impact resistance.

The object of the present invention is to provide a laminated sheet which is excellent in low temperature impact resistance and suitable for a laser tape winding method with high productivity, a laminate formed from this laminated sheet (for example, laminated type pipe), and a method for producing them

### Solution to Problem

The present inventors have intensively studied to attain the above-described object and resultantly found that a laminate having an intermediate layer that secures properties such as low temperature impact resistance, a first dye-containing layer and the second dye-containing layer that are melted by irradiation with laser is very effective, leading to completion of the present invention. That is, the present invention is specified by the following matters.
[1] A laminated sheet comprising a first dye-containing layer, an intermediate layer and a second dye-containing layer laminated in this order, wherein the intermediate layer is composed of a stretched thermoplastic resin or a stretched thermoplastic resin composition, and each dye-containing layer is composed of a thermoplastic resin composition containing a dye which absorbs light having a wavelength of 300 nm or more and 3000 nm or less.
[2] The laminated sheet according to [1], wherein the dye is carbon black.
[3] The laminated sheet according to [1], wherein the content of the dye is 0.01% by mass or more and 7% by mass or less in the thermoplastic resin composition constituting each dye-containing layer.
[4] The laminated sheet according to [1], wherein ratio of the thickness of the first dye-containing layer, the thickness of the intermediate layer and the thickness of the second intermediate layer is 0.2:9.6:0.2 to 2.5:5:2.5.
[5] The laminated sheet according to [1], wherein the difference (Tm1-Tm2 = ΔTm) between the melting point (Tm1) of the stretched thermoplastic resin or the stretched thermoplastic resin composition constituting the intermediate layer and the melting point (Tm2) of the thermoplastic resin or the thermoplastic resin composition before stretching is 5°C or more and 20°C or less.
[6] The laminated sheet according to [1], which is a laminated sheet for laser tape winding molding.
[7] A laminate comprising one or more fused layers of the laminated sheets as described in [1].
[8] The laminate according to [7], wherein the maximum impact force in a high rate impact test at -40°C is 0.5kN or more, and the difference (E1-E2 = ΔE) between the maximum impact force (E1) in a high rate impact test at 23°C and the maximum impact force (E2) in a high rate impact test at -40°C is 0.2 kN or less.
[9] The laminate according to [7], wherein the fracture surface of a test piece after the high rate impact test has a fibrous structure.
[10] A method for producing the laminated sheet as described in [7], comprising
   a step of forming a multilayer body having a constitution comprising a first dye-containing layer, an intermediate layer and a second dye-containing layer laminated in this order, and
   a step of stretching the multilayer body.
[11] The method for producing the laminated sheet according to [10], wherein the stretch ratio in the step of stretching is 7 times or more and 15 times or less.
[12] The method for producing the laminated sheet according to [10], wherein the difference (Tm1-Tm2 = ΔTm) between the melting point (Tm1) of the stretched thermoplastic resin or the stretched thermoplastic resin composition constituting the intermediate layer and the melting point (Tm2) of the thermoplastic resin or the thermoplastic resin composition before stretching is 5°C or more and 20°C or less.
[13] A method for producing a laminate, comprising laminating the laminated sheet as described in [1] by a laser tape winding method.
[14] The method for producing a laminate according to [13], comprising a step of winding the laminated sheet as described in [1] on the surface of a mandrel by a laser tape winding method to form a thermoplastic resin layer before taking out the mandrel.
[15] The method for producing a laminate according to [14], wherein the thickness of the thermoplastic resin layer is 300 µm or more and 100000 µm or less
[16] The method for producing a laminate according to [13], wherein the thermoplastic resin layer is formed by hoop winding and/or helical winding.
[17] The method for producing a laminate according to [14], wherein the lamination angle of the laminated sheet is 10° or more and 85° or less when the length direction of the mandrel is taken as 0°.

### Advantageous Effect of invention

According to the present invention, a laminated sheet which is excellent in low temperature impact resistance and suitable for a laser tape winding method with high productivity, a laminate formed from this laminated sheet (for example, laminated type pipe), and a method for producing them, can be provided.

### Brief Explanation of Drawings

FIG. 1 is a schematic view showing one embodiment of the method for producing a laminate of the present invention (laminated type pipe).
FIG. 2 is a schematic view showing another embodiment of the method for producing a laminate of the present invention (laminated type pipe).
FIG. 3 is a photograph of a test piece after the high rate impact test at 23°C in Example 1.
FIG. 4 is a photograph of a test piece after the high rate impact test at -40°C in Example 1.
FIG. 5 is a photograph of a test piece after the high rate impact test at 23°C in Comparative Example 3.
FIG. 6 is a photograph of a test piece after the high rate impact test at -40°C in Comparative Example 3.
FIG. 7 is a photograph (× 3 times) of the fracture surface of a test piece (FIG. 4) after the high rate impact test at -40°C in Example 1.

### Modes for Carrying Out the Invention

The laminated sheet of the present invention is a laminated sheet comprising a first dye-containing layer, an intermediate layer and a second dye-containing layer laminated in this order. Hereinafter, each layer will be described.

### <Dye-containing layer>

The first dye-containing layer and the second dye-containing layer in the present invention are composed of a thermoplastic resin composition containing a dye that absorbs light having a wavelength of 300 nm or more and 3000 nm or less. When the laminated sheet of the present invention is irradiated with laser, the dye absorbs the laser light and generates heat and the dye-containing layer melts. That is, when each dye-containing layer contains such a dye, the laser fusion method can be carried out successfully. The type of the dye is not particularly limited as long as it absorbs laser light and generates heat and the dye-containing layer melts, and known various dyes can be used. Specific examples thereof include carbon-based dyes, cyanine dyes, phthalocyanine dyes, naphthalocyanine compounds, nickel dithiolene complexes, squarylium dyes, quinone-based compounds, diimmonium compounds and azo compounds. Of them, carbon-based dyes are preferable, and carbon black is more preferable.

Specific examples of the carbon black include SRF (Semi Reinforcing Furnace), GPF (General Purpose Furnace), FEF (Fast Extruding Furnace), MAF (Medium Abrasion Furnace), HAF (High Abrasion Furnace), ISAF (Intermediate Super Abrasion Furnace), SAF (Super Abrasion Furnace), FT (Fine Thermal) and MT (Medium Thermal). The commercially available carbon blacks include, for example, "Asahi #50", "Asahi #55", "Asahi #60", "Asahi #60H", "Asahi #70", "Asahi #80", "Asahi #90" and "Asahi #15" (manufactured by Asahi Carbon Co., Ltd.), "SEAST (registered trademark) SO", "SEAST 116", "SEAST 3", "SEAST 6", "SEAST 7HM" and "SEAST 9" (manufactured by Tokai carbon Co., Ltd.). The dyes such as carbon black may be used singly or in combination of two or more. The average particle size of the dye such as carbon black is preferably 10 nm or more and 50 nm or less, and more preferably 15 nm or more and 30 nm or less.

The type of the thermoplastic resin of the thermoplastic resin composition constituting each dye-containing layer is not limited, and known various thermoplastic resins can be used. Specific examples thereof include polyolefin resins, polyester resins, polyamide resins and polyimide resins. Among them, polyolefin resins are preferable, and from the viewpoint of molding easiness and cost performance of the laminate, polypropylene resins are more preferred. The thermoplastic resin materials may be used singly or in combination of two or more.

The polypropylene resin includes, for example, homopolypropylenes, ethylene-propylene random copolymers, ethylene-propylene block copolymers and propylene-butene random copolymers.

The content of the dye that absorbs light having a wavelength of 300 nm or more and 3000 nm or less in each dye-containing layer is preferably 0.01% by mass or more and 7% by mass or less, and more preferably 0.1% by mass or more and 5% by mass or less in the thermoplastic resin composition constituting each dye-containing layer, from the viewpoint of uniform dispersibility. When the content of the dye is not too small, there is a tendency that the resin of the dye-containing layer is heated and melted more successfully by laser, while when the content is not too large, there is a tendency that decomposition of the thermoplastic resin by laser light can be more suppressed and the dye can be dispersed more successfully in the resin.

In each dye-containing layer, components other than the dye (for example, antioxidants, light stabilizers, flame retardants, lubricants, plasticizers, antistatic agents) may be added within a range that does not impair the effects of the present invention. The total amount of components to be added other than the dye is preferably 10% by mass or less in the thermoplastic resin composition.

The thickness of each dye-containing layer is preferably 1 µm or more and 250 µm or less, more preferably 20 µm or more and 250 µm or less. When the thickness of each dye-containing layer is not too thin, there is a tendency that the interface fuses more sufficiently and interfacial peeling hardly occurs in fusing with laser, while when the thickness is not too thick, there is a tendency that the decrease in low temperature impact resistance is more suppressed by appropriate suppression of heat generation in fusing with laser.

The thermoplastic resin composition constituting each dye-containing layer is not limited as to whether or not it is stretched. That is, each dye-containing layer may be a layer made of a stretched thermoplastic resin composition as in the case of the intermediate layer, or may be a layer made of a non-stretched thermoplastic resin composition. Further, one of the dye-containing layers may be a layer made of a stretched thermoplastic resin composition, and the other dye-containing layer may be a layer made of a non-stretched thermoplastic resin composition. However, it is preferable that each dye-containing layer is a layer made of a stretched thermoplastic resin composition, from the standpoint of preventing peeling between each dye-containing layer and the intermediate layer.

The respective dye-containing layers are explained collectively above. However, the first dye-containing layer and the second dye-containing layer may be the same layer or different layers. That is, the respective constitutions such as the type of the thermoplastic resin, the type and content of the dye, the type and content of components other than the dye and the thickness of the layer in the first dye-containing layer and the second dye-containing layer may be the same or different.

### <Intermediate layer>

The intermediate layer in the present invention is made of a thermoplastic resin or a thermoplastic resin composition. Specific examples of the thermoplastic resin include thermoplastic resins listed in the above-described description of each dye-containing layer. The thermoplastic resin in the intermediate layer and the thermoplastic resin in each dye-containing layer may be the same or different.

The thermoplastic resin or the thermoplastic resin composition constituting the intermediate layer is stretched. By this stretching, a stretching effect is exhibited, and properties such as sufficient impact resistance (particularly, low temperature impact resistance) are secured. Therefore, it is very useful in various applications such as a low temperature fluid transportation pipe. Here, the stretching effect means a characteristic in physical properties due to a special molecular structure such as orientation of polymer chains and high crystallinity which are considered to be exhibited by stretching. The low temperature impact resistance means impact resistance at a temperature of -20°C or lower.

The reason why the laminated sheet of the present invention exhibits excellent properties is not necessarily clear, but the present inventors presume as follows. When the laminated sheet of the present invention is irradiated with laser, each dye-containing layer absorbs a laser beam and generates heat to melt. This makes it possible to perform the laser fusion method successfully. On the other hand, the intermediate layer is secured with properties such as sufficient impact resistance (particularly, low temperature impact resistance) due to the stretching effect. Moreover, since the material that generates heat and melts is each dye-containing layer, the stretching effect of the intermediate layer is not easily lost. That is, it is considered that excellent properties are exhibited by the function-separated multilayer structure in which each dye-containing layer secures melt adhesion and the intermediate layer secures properties such as impact resistance (particularly low temperature impact resistance). In addition, in the general heat fusion method other than the laser fusion method, for example, in the method of heat fusion of the entire laminated sheet using an oven or an autoclave, the stretching effect of the intermediate layer may be highly likely lost due to molecular motion due to heat. Hence, the laminated sheet of the present invention can be particularly preferably used in a laser fusion method (for example, a laser tape winding method) having higher productivity than general heat fusion methods.

Stretching may be uniaxial (unidirectional) or biaxial or more (multidirectional). From the viewpoint of ease of molding and production cost, it is preferable to stretch in the uniaxial direction. The stretch ratio is preferably 7 times or more and 15 times or less, and more preferably 8 times or more and 13 times or less from the viewpoint of achieving both low temperature impact resistance and surface appearance. When the stretch ratio is not too low, the low temperature impact resistance tends to be more improved, while when the stretch ratio is not too high, the surface appearance tends to be more improved.

The difference (Tm1-Tm2 = ΔTm) between the melting point (Tm1) of the stretched thermoplastic resin or the stretched thermoplastic resin composition constituting the intermediate layer and the melting point (Tm2) of the thermoplastic resin or the thermoplastic resin composition before stretching is preferably 5°C or more and 20°C or less. When the difference in melting point (ΔTm) is 5°C or more, the low temperature impact resistance tends to be more improved, while when the difference in melting point (ΔTm) is 20°C or less, there is a tendency that the laminated sheet can be produced more efficiently. The melting point (Tm1) in the intermediate layer is the peak temperature at the first temperature rise for the test sample for DSC measurement, as described in examples described later. The same applies also to the melting point (Tm2).

When the dye-containing layer is a layer made of a stretched thermoplastic resin composition, the difference (Tm1-Tm2 = ΔTm) between the melting point (Tm1) of the stretched thermoplastic resin composition and the melting point (Tm2) of the thermoplastic resin composition before stretching is preferably 5°C or more and 20°C or less, as in the case of the intermediate layer.

In the intermediate layer, other components (for example, antioxidants, light stabilizers, flame retardants, lubricants, plasticizers, antistatic agents) may be added within a range that does not impair the effects of the present invention.

The intermediate layer preferably does not contain a dye that absorbs light having a wavelength of 300 nm or more and 3000 nm or less. If the intermediate layer does not contain a dye that absorbs light of such a wavelength, the decrease in low temperature impact resistance during laser fusion tends to be more suppressed, and problems such as breakage during stretching hardly occur. When a dye is contained, the dye is preferably a dye having a maximum absorption wavelength different from that of the dye contained in each dye-containing layer. The difference in the maximum absorption wavelength between the dye in the intermediate layer and the dye in the dye-containing layer is preferably 50 nm or more, and more preferably 100 nm or more. When the difference in the maximum absorption wavelength is within this range, there is a tendency that the decrease in low temperature impact resistance in fusing with laser is suppressed. On the other hand, when the intermediate layer contains a dye having the maximum absorption wavelength which is the same as or approximate to the maximum absorption wavelength of the dye which each dye-containing layer contains, the content of the dye is preferably a small amount (for example, preferably less than 0.1% by mass in the thermoplastic resin composition) so that the stretching effect of the intermediate layer is not lost.

The thickness of the intermediate layer is preferably 50 µm or more and 1000 µm or less, and more preferably 100 µm or more and 500 µm or less. When the thickness of the intermediate layer is not too thick, there is a tendency that winding of a tape is more easy, while when the thickness is not too thin, there is a tendency that the decrease in low temperature impact resistance in fusing with laser is more suppressed.

### <Laminated sheet>

The laminated sheet of the present invention is a laminated sheet comprising a first dye-containing layer, an intermediate layer and a second dye-containing layer described above laminated in this order. That is, the dye-containing layers containing a dye that absorbs light having a wavelength of 300 nm or more and 3000 nm or less become surface layers, and these surface layers are melted by laser irradiation to improve the adhesiveness. Therefore, the laminated sheet of the present invention can be suitably used in the laser fusion method, and is particularly useful as a laminated sheet for laser tape winding molding. In the present invention, "a first dye-containing layer, an intermediate layer and a second dye-containing layer laminated in this order" means only the mutual positional relationship of these three layers. That is, the order of layer formation of each layer in the production process is not limited at all, and it is sufficient that the three layers have such a positional relationship after production. Further, since it means the mutual positional relationship of only three layers, other layers may intervene between the first dye-containing layer and the intermediate layer or between the intermediate layer and the second dye-containing layer, within a range that does not deteriorate the effects of the present invention.

In the laminated sheet of the present invention, the intermediate layer is preferably thicker than each dye-containing layer from the viewpoint of balance between moldability and performance. Specifically, the ratio of the thickness of the first dye-containing layer, the thickness of the intermediate layer and the thickness of the second intermediate layer is preferably 0.2:9.6:0.2 to 2.5:5:2.5. That is, the thickness ratio of the first dye-containing layer is preferably within the range of 0.2 to 2.5 when the total thickness is taken as 10. The same applies also to the thickness ratio of the second dye-containing layer. On the other hand, the thickness ratio of the intermediate layer is preferably in the range of 9.6 to 5 when the total thickness is taken as 10. When the thickness ratio of the intermediate layer is 9.6 or less or the thickness ratio of the dye-containing layer is 0.2 or more, there is a tendency that the interface is more sufficiently fused in fusing with laser and interfacial peeling is less likely to occur. On the other hand, when the thickness ratio of the intermediate layer is 5 or less or the thickness ratio of the dye-containing layer is 2.5 or more, there is a tendency that the decrease in low temperature impact resistance in fusing with laser is more suppressed. This thickness ratio of three layers is more preferably 0.5:9.0:0.5 to 2.0:6.0:2.0.

In the laminated sheet of the present invention, the intermediate layer is preferably thicker than each dye-containing layer from the viewpoint of balance between moldability and performance. Specifically, the ratio of the thickness of the first dye-containing layer, the thickness of the intermediate layer and the thickness of the second intermediate layer is preferably 0.2:9.6:0.2 to 2.5:5:2.5.

The thickness of the laminated sheet of the present invention is preferably 50 µm or more and 1500 µm or less, an more preferably 100 µm or more and 1000 µm or less. When the thickness of the laminated sheet is not over the upper limit value, impart properties tend to be easily manifested, while when thickness is not lower than the lower limit value, shape followability tends to become better in processing with laser.

When the laminated sheet of the present invention described above is irradiated with laser, each dye-containing layer absorbs laser light and generates heat to melt. This makes it possible to perform the laser fusion method well. On the other hand, the intermediate layer is secured with properties such as sufficient impact resistance (particularly, low temperature impact resistance) due to the stretching effect. Hence, for example, it is suable for the application in which two or more layers of this laminated sheets are fused and used as a laminate, and is particularly suitable for a laser tape winding method with high productivity.

### <Method for producing laminated sheet>

The laminated sheet of the present invention can be produced, for example, by a method comprising a step of forming a multilayer body having a constitution in which a first dye-containing layer, intermediate layer and a second dye-containing layer are laminated in this order, and a step of stretching the multilayer body. Here, "a multilayer body having a constitution in which a first dye-containing layer, intermediate layer and a second dye-containing layer are laminated in this order" means only the mutual positional relationship of three layers in the multilayer body. That is, the order of layer formation of each layer in the production process is not limited at all, and it is sufficient that the three layers in the multilayer body after formation have a constitution of such a positional relationship. Further, since it means the mutual positional relationship of only three layers, other layers may intervene between the first dye-containing layer and the intermediate layer or between the intermediate layer and the second dye-containing layer, within a range that does not deteriorate the effects of the present invention.

Specifically, for example, a material constituting each dye-containing layer laminated on both sides of a material constituting an intermediate layer is coextruded using a melt extruder equipped with a multi manifold die for co-extrusion, to obtain a multilayer body for the laminated sheet of the present invention, in which respective layers are thermally fused. The temperature for melt extrusion in this procedure is usually 170°C or higher and 300°C or lower, and preferably 200°C or higher and 270°C or lower.

The resulting multilayer body is stretched by a roll stretching machine, and if necessary, subjected to a thermal treatment, and wound, to obtain the laminated sheet of the present invention. The stretch ratio at this time is preferably 7 times or more and 15 times or less, and more preferably 8 times or more and 13 times or less. When the stretch ratio is not too low, the low temperature impact resistance tends to be more improved, while when the stretch ratio is not too high, the surface appearance tends to be more improved.

The method described above is a method for producing a laminated sheet in which not only the intermediate layer, but also each dye-containing layer is made of a stretched thermoplastic resin composition. On the other hand, in the laminated sheet of the present invention, each dye-containing layer may be a layer made of a thermoplastic resin composition not stretched. The laminated sheet in such a case can be obtained by, for example, a method of laminating or forming each dye-containing layer on both surfaces of the intermediate layer after stretching. From the viewpoint of preventing peeling between the dye-containing layer and the intermediate layer, a method of simultaneously stretching the intermediate layer and each dye-containing layer is preferable.

### <Laminate>

The laminate of the present invention is a laminate in which one or more layers (preferably two or more layers, more preferably 6 or more layers) of the laminated sheet of the present invention are fused. That is, the laminate of the present invention may be a laminate having a constitution in which a plurality of the laminated sheets of the present invention are laminated by fusion or a laminate having a constitution in which the laminated sheet of the present invention is laminated to other substance by fusion. As a specific example of the former embodiment, there is a laminated type pipe obtained by laminating the laminated sheet of the present invention in the form of a pipe by a laser tape winding method. As a specific example of the latter embodiment, a laminate is mentioned reinforced by laminating the laminated sheet of the present invention to a material to be reinforced such as a pressure vessel, an existing pipe and a building material by fusion.

The laminate of the present invention exhibits excellent results in the high rate impact test, which is an index for low temperature impact resistance. Specifically, the maximum impact force in the high rate impact test at -40°C is preferably 0.5 kN or more, and more preferably 0.8kN or more. Further, the difference (E1-E2 = ΔE) between the maximum impact force (E1) in the high rate impact test at 23°C and the maximum impact force (E2) in the high rate impact test at -40°C is preferably 0.2 kN or less. It can be said that the smaller the difference (ΔE) is, the more the impact resistance close to the impact resistance at room temperature is maintained even at low temperature.

It is preferable for the laminate of the present invention that the fracture surface of the test piece after the high rate impact test has a fibrous structure. In the high rate impact test, when the interface (fracture surface) generated at the time of fracture has a fibrous structure, it is considered that the effect of absorbing impact energy is enhanced by the generation of this interface.

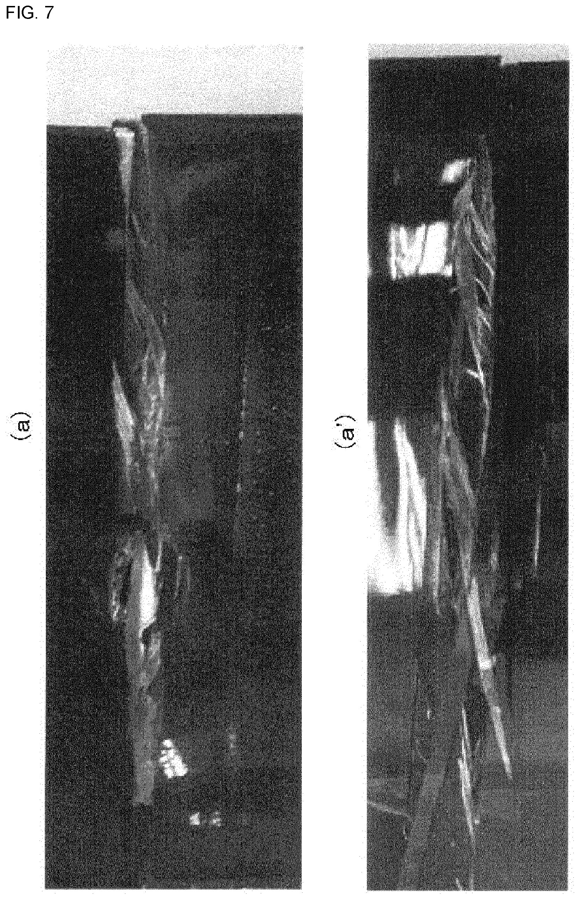

In the present invention, the maximum impact force in the high rate impact test is the maximum load generated on the largest impact core measured in the impact test specified in ASTM D3763, that is, the point indicating the onset of fracture. Further, the fibrous structure of the fracture surface means, for example, as shown in FIG. 7, a portion having a shape similar to a fiber constituted by many fracture surfaces extending in a direction substantially parallel to the stretching direction of the test piece.

One preferable embodiment of the laminate of the present invention is a laminated type pipe. The laminated type pipe is obtained, for example, by laminating the laminated sheet of the present invention in the form of a pipe by a laser tape winding method. When producing a laminated type pipe, the laminated sheet of the present invention is usually cut into a tape and used. The width of the tape is preferably 6 mm or more and 200 mm or less, and more preferably 12 mm or more and 100 mm or less. When the width of the tape is not too wide, there is a tendency that the temperature of the whole tape width can be increased more uniformly, while when the width is not too narrow, there is tendency that the time for winding on a mandrel described later can be suppressed and productivity can be more improved.

When a wide laminated sheet in which the intermediate layer is uniaxially stretched is cut out into a tape shape, the tape-shaped cutting direction may be in a direction parallel to the uniaxial stretching direction. When a wide laminated sheet in which the intermediate layer is biaxially stretched is cut into a tape shape, the tape-shaped cutting direction may be in a direction parallel to the longitudinal direction of the laminated sheet.

### <Method for producing laminate>

The laminate of the present invention is suitably obtained, for example, by laminating the laminated sheet of the present invention by a laser tape winding method. The laminate obtained by a laser tape winding method includes, for example, a laminated type pipe having a constitution in which a plurality of the laminated sheets of the present invention are laminated by a laser tape winding method, and, a laminate reinforced by laminating the laminated sheet of the present invention to a material to be reinforced such as a pressure vessel, an existing pipe and a cylindrical or hollow cylindrical building material by a laser tape winding method.

Hereinafter, a method for producing a laminated type pipe, which is one embodiment of the laminate, will be mainly described.

The laminate such as a laminated type pipe is obtained, for example, by a method comprising a step of winding the laminated sheet of the present invention on the surface of a mandrel by a laser tape winding method to form a thermoplastic resin layer before taking out the mandrel.

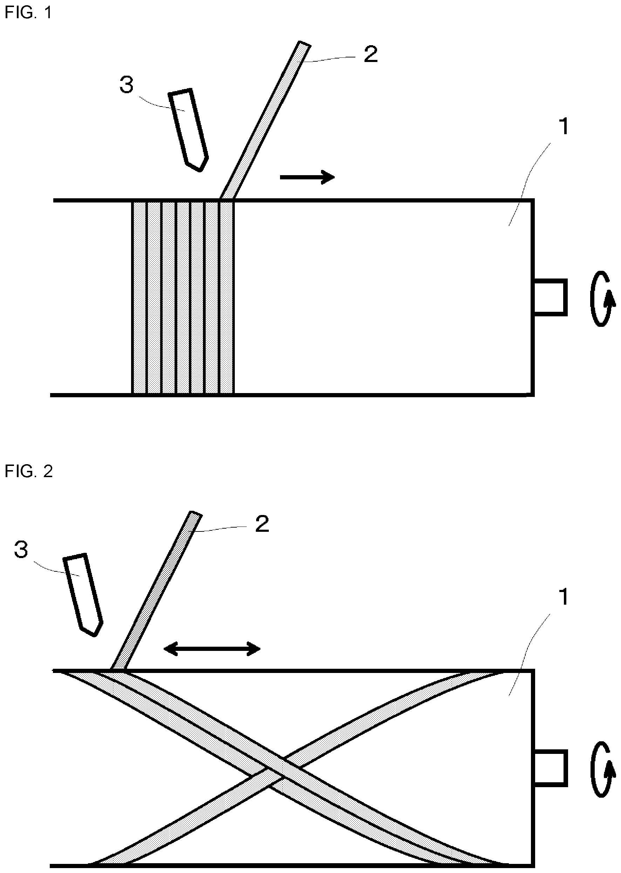

FIG. 1 is a schematic view showing one embodiment of the method for producing a laminate (laminated type pipe) of the present invention. In this embodiment, while rotating the mandrel 1, the laminated sheet 2 is hoop-wound on the surface of the body portion of the mandrel 1 by a tape winding method in the stretching direction of the laminated sheet 2. Simultaneously with this winding, the laminated sheets 2 are mutually fused by irradiating with laser from a laser irradiation device 3, to form a thermoplastic resin layer (hoop layer) on the surface of the body portion of the mandrel 1. Thereafter, the mandrel is taken out.

FIG. 2 is a schematic view showing another embodiment of the method for producing a laminate (laminated type pipe) of the present invention. In this embodiment, while rotating the mandrel 1, the laminated sheet 2 is helical-wound on the surface of the body portion of the mandrel 1 by a tape winding method in the stretching direction of the laminated sheet 2. Simultaneously with this winding, the laminated sheets 2 are mutually fused by irradiating with laser from a laser irradiation device 3, to form a thermoplastic resin layer (helical layer) on the surface of the body portion of the mandrel 1. Thereafter, the mandrel is taken out.

The thickness of the thermoplastic resin layer is preferably in a range of 300 µm or more and 100000 µm or less, and more preferably 1000 µm or more and 80000 µm or less.

The thermoplastic resin layer is formed by hoop winding in FIG. 1 and formed by helical winding in FIG. 2, however, the means is not limited them. For example, the resin layer may be formed by using hoop winding and helical winding together, or by other winding methods, however, the resin layer is preferably formed by hoop winding and/or helical winding. When the thermoplastic resin layer is formed by using hoop winding and helical winding together, the ratio (F/H) of the thickness (F) of the thermoplastic resin layer by hoop winding to the thickness (H) of the thermoplastic resin layer by helical winding is preferably 0.25 to 4.0, more preferably 0.33 to 3.0, and particularly preferably 0.5 to 2.0.

The lamination angle of the laminated sheet is preferably 10° or more and 85° or less, and more preferably 30° or more and 80° or less, with the angle in the length direction of the mandrel being 0°. When the lamination angle is within this range, low temperature impact resistance tends to be more improved.

When laser fusion is performed by a tape winding method, for example, the laminated sheets are allowed to contact with the surface of a mandrel by a tape winding method while melting the sheets by irradiating with laser, and are mutually fused.

The tape winding method includes, for example, methods disclosed in JP-A No. 2005-206847 (e.g., FIG. 8), U.S. Patent No. 6,451,152, AFPT company (Germany) website (http://www.afpt.de/welcome/); "Development of a hybrid tail rotor drive shaft by the use of thermoplastic Automated fiber placement" and "Selective reinforcement of steel with CF/PA6 composites in a laser tape placement process: effect of surface preparation and laser angle on interfacial bond strength" published in 17th-Europian conference on Composite Materials, 1 to 8 (2016).

In the case of fusing with laser, it is preferable to move a light source and a mandrel appropriately to melt and fuse the dye-containing layer efficiently. When using such a method, the movement speed thereof is 10 m/min or more and 100 m/min or less, and preferably 30m/min or more and 90 m/min or less, in terms of the scanning rate of the laminated sheet.

The laser wavelength is preferably in the range of 300 to 3000 nm. Further, this wavelength preferably includes the absorption wavelength region of the dye contained in the dye-containing layer. The laser output is preferably 50 W or more and 5 kW or less from the viewpoint of preventing deterioration and deformation of the resin and melting property.

The laminate described above can be used for various purposes. For example, it can be used for a liquid or gas transportation pipe, a water pipe in a cold region, a sewer pipe, a gas pipe, an oil transportation pipe, a pipe for transferring a chemical substance, a container and a pressure container. In particular, it can be used for applications requiring strength even at low temperatures, and is very useful, for example, as an LNG transport pipe.

### Examples

Hereinafter, the present invention will be described further in detail by examples. In the following description, "%" means "% by mass".

### <Example 1>

### (Fabrication of laminated sheet)

Using a multi-manifold type three-layer dice with a width of 600 mm in a three-type three-layer film extrusion molding apparatus manufactured by Bruckner, a three-layer film in which the ratio of the thicknesses of a first dye-containing layer, an intermediate layer and a second dye-containing layer is 1:8:1 was molded. For the intermediate layer, a polypropylene resin (manufactured by Prime Polymer Co., Ltd., Prime Polypro (registered trademark) F113G, melt flow rate (ASTM D1238, 190°C, load 2.16 kg) = 3.0 g/10 min, melting point = 160°C) was used. For each dye-containing layer, a resin composition prepared by adding 3% of a carbon black-containing master batch (manufactured by DIC Corporation, PEONY (registered trademark) BLACK BMB-16117, carbon black content = 40%, carbon black average particle diameter = 20 nm (ASTM D3849)) to a polypropylene resin (Prime Polypro (registered trademark) F113G) was used. The temperatures of the extruder and the T die were set to 260°C and a film was formed, and cast on a cooling roll of 40°C under the condition of 2 m/min, and then stretched 10 times in the length direction with a 20 m/min stretching roll of a longitudinal stretching device, to fabricate a laminated sheet. The thickness of the laminated sheet after stretching was 250 µm. This was slit into a width of 25 mm, to produce a three-layer tape.

### (Fabrication of winding pipe (laminated type pipe))

Using a robot equipped with a "STWH INB" type winding head manufactured by AFPT for closed loop control of a diode laser with an output of 3 kW and a wavelength of 960 to 1070 nm, a three-layer tape was wound on a mandrel with an inner diameter Ø of 100 mm in the stretching direction of the three-layer tape while fusing at a set temperature of 180°C by laser, to form a thermoplastic resin layer. Then, the mandrel was taken out to obtain a winding pipe. Regarding the winding angle of the three-layer tape in winding, the three-layer tape was wound at an angle of +80°, then wound thereon at an angle of -80°, and further, winding at angles of +80° and - 80° was repeated, with the length direction of the mandrel being 0°, so that the total thickness was 2 mm.

With respect to the appearance of the obtained winding pipe, the surface low-sliding property was good, and the surface gloss was also good.

The obtained winding pipe was cut out to prepare a test piece (100×100 mm), and the following evaluation was performed.

### <High rate impact test>

The test piece (100×100 mm) was fixed to an ASTM standard high-speed surface impact test device so that the striker would collide with the center part, and the maximum impact force, the displacement and energy at the maximum load point, and the displacement and energy at the puncture point were measured under the following conditions. At the same time, the destruction mode was also confirmed. The results are shown in Table 1.
Striker diameter: 1/2 inch
Receiving side ring diameter: 2 inch
Measurement temperature: room temperature, -40°C
Striker speed: 1.0 m/s

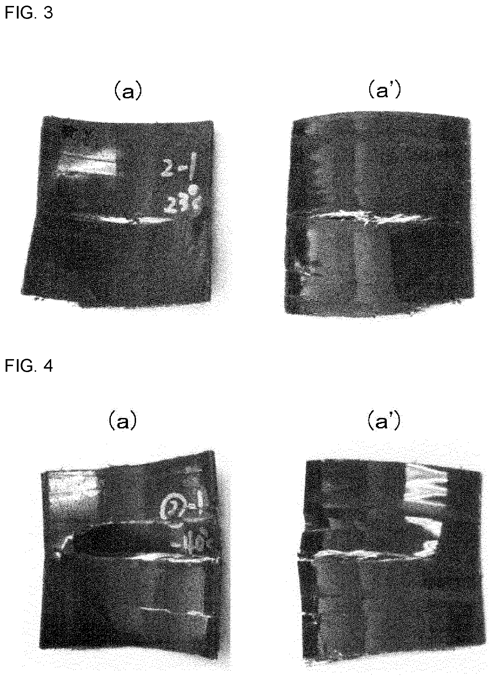

FIG 3 is a photograph of the test piece after the high rate impact test at 23°C, FIG. 4 is a photograph of the test piece after the high rate impact test at -40°C, and FIG. 7 is a photograph (x 3 times) of the fracture surface of the test piece (FIG. 4) after the high rate impact test at -40°C. The photograph with a reference numeral (a) is a photograph of the inside (mandrel side) of the test piece, and the photograph with a reference numeral (a') is a photograph of the outside of the test piece.

### <Measurement of melting point (Tm1)>

The part of the intermediate layer (layer not containing carbon black) of the test piece was cut out, to give a test sample for DSC measurement. As the measuring device, Pylis manufactured by Perkin Elmer was used, and the peak temperature when the temperature was raised from 30°C to 230°C at a temperature rising rate of 10°C/min was taken as the melting point. The melting point (Tm1) thereof was 169.76°C.

### <Example 2>

A three-layer tape was fabricated in the same manner as in Example 1, except that a polypropylene-based random copolymer resin (manufactured by Prime Polymer Co., Ltd., Prime Polypro (registered trademark) F 327, melt flow rate (ASTM D1238, 190°C, load 2.16 kg) = 7.0 g/10 min, melting point = 138°C) was used instead of the polypropylene resin (Prime Polypro (registered trademark) F113G), as the resin constituting each dye-containing layer.

Using this three-layer tape, a winding pipe was fabricated in the same manner as in Example 1. Regarding the appearance of the resultant winding pipe, the surface low-sliding property was good, and the surface gloss was also good.

On the resultant winding pipe, the high rate impact test was carried out in the same manner as in Example 1. The results are shown in Table 1. The form of the fracture surface was similar to that in Example 1.

Further, for the intermediate layer (layer not containing carbon black) of the test piece, the melting point was measured in the same manner as in Example 1. The melting point (Tm1) thereof was 169.47°C.

### <Comparative Example 1>

A three-layer tape was fabricated in the same manner as in Example 1, except that a master batch containing carbon black was not added to a first dye-containing layer and a second dye-containing layer (namely, constituted of the same resin as for the intermediate layer). This three-layer tape was wound on a mandrel while fusing with laser in the same manner as in Example 1, however, the tape-tape interface was not fused, and a winding pipe was not obtained.

### <Comparative Example 2>

Using a three-type three-layer film extrusion molding apparatus manufactured by Bruckner, a cast film having a thickness of 250 µm was molded from a polypropylene resin (Prime Polypro (registered trademark) F113G), and this was slit into a width of 25 mm, to obtain a single-layer tape. This single-layer tape was wound on a mandrel while fusing with laser in the same manner as in Example 1, however, the tape-tape interface was not fused, and a winding pipe was not obtained.

### <Comparative Example 3>

A polypropylene resin (Prime Polypro (registered trademark) F113G) was hot-pressed, to obtain a 2 mm thick flat plate. On this flat plate, the same high rate impact test as in Example 1 was carried out. The results are shown in Table 1.

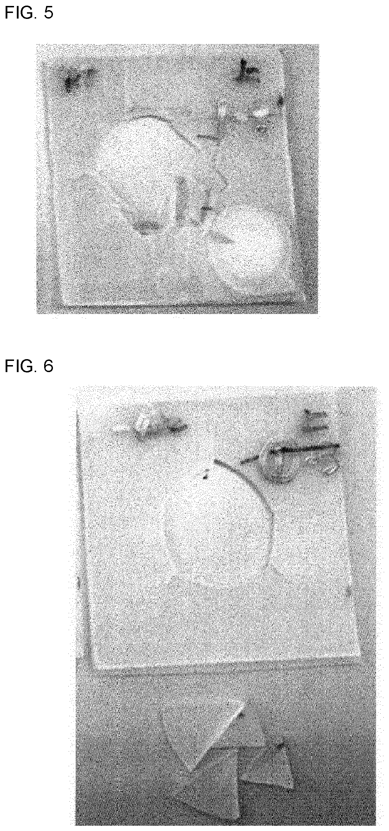

FIG. 5 is a photograph of the test piece after the high rate impact test at 23°C, and FIG. 6 is a photograph of the test piece after the high rate impact test at -40°C.

Using the flat plate of Comparative Example 3, the melting point was measured in the same manner as for the melting point (Tm1) in Examples 1 and 2. The melting point was 160.42°C. Since this flat plate is made of the same polypropylene resin (Prime Polypro (registered trademark) F113G) as for the intermediate layers of Examples 1 and 2, its melting point corresponds to the melting point (Tm2) of the intermediate layers before stretching in Examples 1 and 2. Therefore, the difference (ΔTm) between the melting point (Tm1) of the stretched thermoplastic resin composition constituting the intermediate layer and the melting point (Tm2) of the thermoplastic resin composition before stretching was 169.76°C-160.42°C = 9.34°C in Example 1 and 169.47°C-160.42°C = 9.05°C in Example 2.

### <Comparative Example 4>

A three-layer tape was fabricated in the same manner as in Example 1, except that a master batch containing carbon black was not added to one of a first dye-containing layer and a second dye-containing layer (namely, one was constituted of the same resin as for the intermediate layer). This three-layer tape was wound on a mandrel while fusing with laser in the same manner as in Example 1, however, the tape-tape interface was not fused, and a winding pipe was not obtained.

### <Comparative Example 5>

The both surfaces of the three-layer tape fabricated in Comparative Example 1 were colored using a black oily marker (manufactured by Teranishi Chemical Industry Co., Ltd., trade name: Magic Ink Large). This three-layer tape after coloring was wound on a mandrel while fusing with laser in the same manner as in Example 1, however, the tape-tape interface was not fused, and a winding pipe was not obtained.

### <Comparative Example 6>

A 50 µm thick polyimide film (manufactured by Ube Industries, Ltd., trade name: UPILEX 50S) was placed as a release film on a stainless steel plate with a length of 250 mm × 250 mm and a thickness of 2.5 mm. Thereon, the three-layer tape fabricated in Comparative Example 1 was placed at an angle of +80° with respect to the edge of the stainless steel plate, further thereon, placed at an angle of - 80°, and this was repeated to place a total of eight three-layer tapes (+80°/-80°/+80°/- 80°/+80°/-80°/+80°/-80°). Thereon, the same release film and stainless steel plate were placed, and sandwiched the eight three-layer tapes.

An attempt was made to perform press molding on the eight three-layer tapes sandwiched by the stainless steel plate with raising temperature to 180°C using a hot-press machine (manufactured by Toyo Seiki Seisaku-sho, Ltd., device name: Mini test press MP-WCH). However, in the stage of residual heat (3 minutes at a pressure of 10 kgf), the three-layer tape shrank greatly and the release film was wrinkled, thus, a laminate could not be obtained.

**Table 1**

| | Test temperature | Maximum impact force (kN) | ΔE (kN) | Maximum load point | | Puncture point | | Destruction mode | Fracture surface |
|---|---|---|---|---|---|---|---|---|---|
| | | | | Displacement (mm) | Energy (J) | Displacement (mm) | Energy (J) | | |
| Example 1 | 23°C | 0.94 | 0.07 | 28.34 | 12.67 | 36.76 | 16.42 | Break | fibrous structure |
| | -40°C | 0.87 | | 21.94 | 9.21 | 32.08 | 13.39 | Break | fibrous structure |
| Example 2 | 23°C | 0.92 | 0.03 | 28.12 | 12.45 | 36.31 | 15.98 | Break | fibrous structure |
| | -40°C | 0.89 | | 23.61 | 10.22 | 35.72 | 14.15 | Break | fibrous structure |
| Comparative Example 3 | 23°C | 1.49 | 1.25 | 9.97 | 7.9 | 10.91 | 9.04 | Break | fracture (partially ductile fracture) |
| | -40°C | 0.24 | | 2.48 | 0.3 | 3.77 | 0.5 | Break | brittle fracture |

As shown in Table 1, the winding pipes in Examples 1 and 2 were excellent particularly in low temperature impact resistance. In contrast, the flat plate in Comparative Example 3 was poor in properties such as low temperature impact resistance since the plate was composed of a thermoplastic resin composition not stretched.

### Explanation of marks

- 1:: Mandrel
- 2:: Laminated sheet
- 3:: Laser irradiation device

## Claims

1. A laminated sheet comprising a first dye-containing layer, an intermediate layer and a second dye-containing layer laminated in this order, wherein the intermediate layer is composed of a stretched thermoplastic resin or a stretched thermoplastic resin composition, and each dye-containing layer is composed of a thermoplastic resin composition containing a dye which absorbs light having a wavelength of 300 nm or more and 3000 nm or less.

2. The laminated sheet according to Claim 1, wherein the dye is carbon black.

3. The laminated sheet according to Claim 1, wherein the content of the dye is 0.01% by mass or more and 7% by mass or less in the thermoplastic resin composition constituting each dye-containing layer.

4. The laminated sheet according to Claim 1, wherein ratio of the thickness of the first dye-containing layer, the thickness of the intermediate layer and the thickness of the second intermediate layer is 0.2:9.6:0.2 to 2.5:5:2.5.

5. The laminated sheet according to Claim 1, wherein the difference (Tm1-Tm2 = ΔTm) between the melting point (Tm1) of the stretched thermoplastic resin or the stretched thermoplastic resin composition constituting the intermediate layer and the melting point (Tm2) of the thermoplastic resin or the thermoplastic resin composition before stretching is 5°C or more and 20°C or less.

6. The laminated sheet according to Claim 1, which is a laminated sheet for laser tape winding molding.

7. A laminate comprising one or more fused layers of the laminated sheets according to Claim 1.

8. The laminate according to Claim 7, wherein the maximum impact force in a high rate impact test at -40°C is 0.5kN or more, and the difference (E1-E2 = ΔE) between the maximum impact force (E1) in a high rate impact test at 23°C and the maximum impact force (E2) in a high rate impact test at -40°C is 0.2 kN or less.

9. The laminate according to Claim 7, wherein the fracture surface of a test piece after the high rate impact test has a fibrous structure.

10. A method for producing the laminated sheet as described in Claim 1, comprising
a step of forming a multilayer body having a constitution comprising a first dye-containing layer, an intermediate layer and a second dye-containing layer laminated in this order, and
a step of stretching the multilayer body.

11. The method for producing the laminated sheet according to Claim 10, wherein the stretch ratio in the step of stretching is 7 times or more and 15 times or less.

12. The method for producing the laminated sheet according to Claim 10, wherein the difference (Tm1-Tm2 = ΔTm) between the melting point (Tm1) of the stretched thermoplastic resin or the stretched thermoplastic resin composition constituting the intermediate layer and the melting point (Tm2) of the thermoplastic resin composition before stretching is 5°C or more and 20°C or less.

13. A method for producing a laminate, comprising laminating the laminated sheet as described in Claim 1 by a laser tape winding method.

14. The method for producing a laminate according to Claim 13, comprising a step of winding the laminated sheet as described in Claim 1 on the surface of a mandrel by a laser tape winding method to form a thermoplastic resin layer before taking out the mandrel.

15. The method for producing a laminate according to Claim 14, wherein the thickness of the thermoplastic resin layer is 300 µm or more and 100000 µm or less.

16. The method for producing a laminate according to Claim 13, wherein the thermoplastic resin layer is formed by hoop winding and/or helical winding.

17. The method for producing a laminate according to Claim 14, wherein the lamination angle of the laminated sheet is 10° or more and 85° or less when the length direction of the mandrel is taken as 0°.
